# FASCICULE DE BREVET EUROPEEN

(11) **EP 2 451 059 B1**
(45) Date de publication et mention de la délivrance du brevet: **23.01.2019**
(21) Numéro de dépôt: 11186851.9
(22) Date de dépôt: 27.10.2011
(51) Int. Cl.: H02K 11/04

(54) **Moteur électromagnétique sans balai**
Bürstenloser elektromechanischer Motor
Brushless electromagnetic motor.

(30) Priorité: 04.11.2010 FR 1059098
(43) Date de publication de la demande: 09.05.2012
(73) Titulaire: XAP, 30900 Nimes (FR)
(72) Inventeur: Hardy, François, 30820 CAVEIRAC (FR)
(74) Mandataire: Roman, Alexis

(56) Documents cités:
- EP-A2- 0 588 448
- FR-A1- 2 852 162
- GB-A- 2 462 940
- JP-A- 2009 201 343
- US-A1- 2005 212 380

## Description

### Domaine technique de l'invention.

L'invention a pour objet un moteur électromagnétique sans balai (plus connus sous le terme anglais "brushless".

L'invention a également pour objet un véhicule terrestre marin ou aérien équipé d'un tel moteur électromagnétique.

### État de la technique.

Les moteurs électromagnétiques sans balai sont bien connus de l'homme du métier. Un tel moteur comprenant généralement un stator (partie fixe) et un rotor (partie mobile). Le stator peut être interne (moteur « brushless out-runner ») ou externe (moteur « brushless in-runner ») comportant sur chaque phases des bobinages connectés en triangle ou en étoile. Le rotor, comprenant généralement plusieurs pôles, est porteur de l'arbre de sortie auquel il transmet la puissance mécanique. Le rotor supporte habituellement des aimants fixés sur sa périphérie pour des moteurs « brushless in-runner » ou à l'intérieur d'une cloche pour les moteurs « brushless out-runner ».

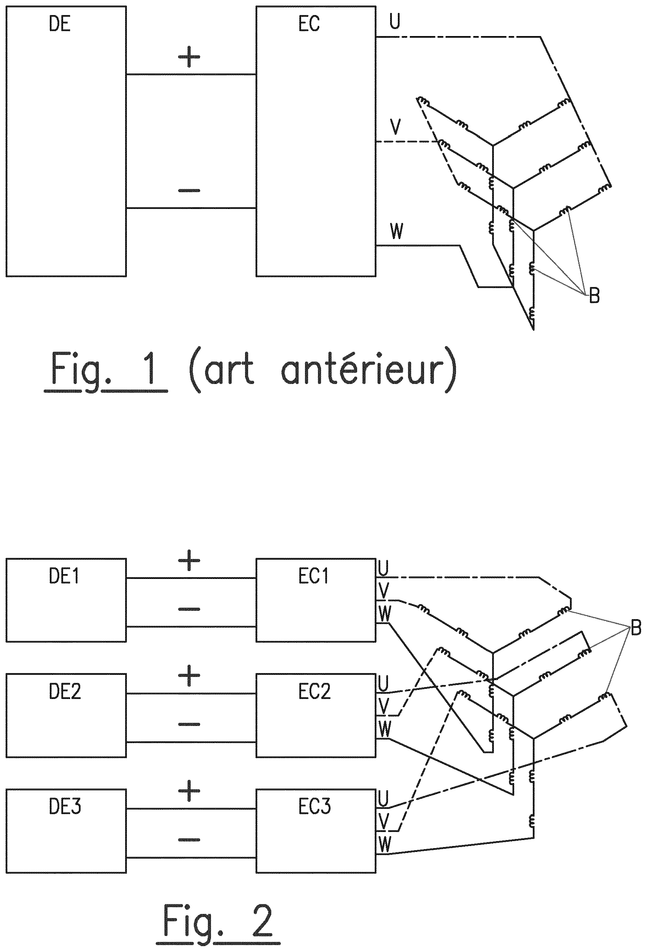

Le nombre de phase d'un stator est généralement égal à 3, mais peut être supérieur. La figure 1 schématise un moteur triphasé classique, constitué de 3 phases (U, V, W), comprenant chacune 6 bobinages (B) montés en étoile. Une électronique de commande EC est commune à chacune des phases (U, V et W) et un dispositif d'alimentation électrique (DE) (batterie, pile à combustible, ...) assure l'alimentation électrique de chacun des bobinages (B). La commande d'une phase nécessite habituellement au moins 2 transistors montés en « H ». La commande d'un moteur triphasé nécessite donc au moins 6 transistors de puissances (14 transistors pour un moteur à 7 phases).

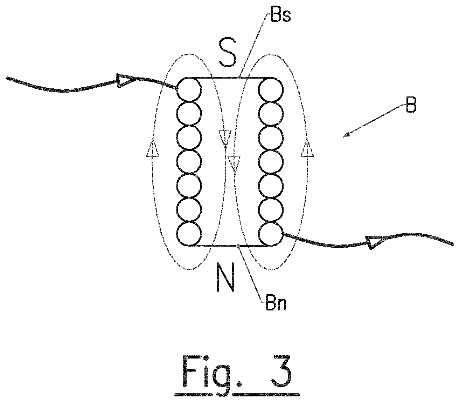

En se rapportant à la figure 3, lorsqu'un bobinage (B) est traversé par un courant électrique, un champ magnétique est créé (dont les lignes de champs sont schématisées par les lignes en pointillés). Le bobinage (B) ainsi excité présente une polarité inversée à chacune de ses extrémités (Bn, Bs). Ces dernières sont alors dites « magnétiques ». Dans l'exemple de la figure 3, l'extrémité supérieure (Bs) par laquelle est alimenté le bobinage (B) présente une polarité Sud et l'extrémité inférieure opposée (Bn) une polarité Nord. L'homme du métier sait parfaitement maîtriser les polarités d'un bobinage en fonction notamment de son sens d'enroulement et du courant d'alimentation qui le traverse.

Le fonctionnement d'un moteur électromagnétique sans balai est relativement simple. Les bobinages statoriques sont excités séquentiellement pour créer un champ magnétique tournant à la même fréquence que les tensions d'alimentation et entrainant en rotation le rotor. Les pôles rotoriques aimantés cherchent à chaque instant à s'orienter dans le sens du champ généré par les bobinages statoriques excités : une force électromagnétique « attractive » tend à faire tourner le rotor : les pôles Nord (ou Sud) des bobinages statoriques excités attirent les pôles rotoriques Sud (ou Nord).

Ce fonctionnement basique peut être plus complexe dans le but d'augmenter le couple moteur. En effet, il est possible, selon l'agencement des bobinages statoriques, leurs sens de bobinage et les caractéristiques du courant d'alimentation qui les traversent, de créer une force électromagnétique « répulsive » qui se combine à la force électromagnétique « attractive » pour augmenter le couple moteur. Par exemple, certains bobinages statoriques peuvent être excités de façon à présenter un pôle Nord attirant des pôles Sud rotoriques et d'autres bobinages statoriques peuvent être excités en même temps, de façon à présenter un pôle Sud repoussant d'autres pôles rotoriques de même polarité.

Les moteurs électromagnétiques sans balai, bien que de conception simple, ne sont toutefois pas toujours très performant. En effet, dans certaines applications, et notamment pour la propulsion d'un véhicule terrestre marin ou aérien, le véhicule n'étant pas un jouet ou un modèle réduit, le couple moteur obtenu n'est pas suffisant.

Le document FR 2.852.162 (LEROY SOMER MOTEURS) décrit un moteur électromagnétique à double flux et dans lequel le stator présente des dents auxquelles sont associées des bobines individuelles. Le dispositif de gestion de l'alimentation électrique de chaque bobinage est déporté à la sortie du moteur. En cas de défaillance de ce dispositif de gestion, le moteur ne peut plus fonctionner.

Le document JP2009201343 décrit un moteur électromagnétique sans balai comprenant un stator et un rotor mobile en rotation par rapport audit stator, et dans lequel le rotor comprend des pôles aimantés répartis radialement autour de l'axe de rotation dudit rotor, et dans lequel le stator comprend des bobinages présentant deux extrémités, lesdites extrémités présentant des polarités inversées lorsque lesdits bobinages sont excités, lesdits bobinages étant répartis autour des pôles du rotor, lesdits bobinages étant excités séquentiellement pour créer un champ magnétique tournant entraînant en rotation ledit rotor.

On connait par le document GB 2462940 (PROTEAN HOLDING CORP) un moteur électromagnétique conforme au préambule de la revendication principal et dans lequel le stator comprend une pluralité de dispositifs de commande contrôlant chacun un bobinage. Les dispositifs de commande sont fixés sur des circuits imprimés montés de manière adjacente aux bobinages statoriques. Ces derniers ne sont pas directement fixés sur les circuits imprimés mais sur la périphérie externe du stator. Cette configuration nécessite d'effectuer un grand nombre de câblages entre les bobinages et les unités de gestion électronique. Et en cas de défaillance d'un bobinage, il est nécessaire de désolidariser l'intégralité du stator des unités de gestion. C'est une opération complexe et donc couteuse. En outre, les bobinages axiaux ne peuvent pas être refroidis de manière optimale car les tôles magnétiques formant le stator offrent peu de surface permettant la dissipation de chaleur par convection ou conduction.

Face à cet état des choses, l'invention a pour objectif de minimiser les coûts de câblages dans un moteur électromagnétique sans balai, ainsi que faciliter le refroidissement des bobinages.

Un autre objectif de l'invention est d'augmenter la fiabilité du moteur électromagnétique sans balai.

Encore un autre objectif de l'invention est de diminuer les coûts de fabrication d'un moteur électromagnétique sans balai

Encore un autre objectif de l'invention est d'alléger la structure du moteur, de façon à obtenir une puissance massique élevée.

L'invention a également pour objectif d'augmenter le couple moteur disponible dans un moteur électromagnétique sans balai.

L'invention a en outre pour objectif d'augmenter la fiabilité du système d'alimentation électrique des unités de gestion.

### Divulgation de l'invention.

La solution proposée par l'invention est un moteur électromagnétique sans balai comprenant un stator et un rotor mobile en rotation par rapport audit stator, et dans lequel :
- le rotor comprend des pôles aimantés répartis radialement autour de l'axe de rotation dudit rotor,
- le stator comprend des bobinages présentant deux extrémités, lesdites extrémités, lesdites extrémités présentant des polarités inversées lorsque lesdits bobinages sont excités, lesdits bobinages étant répartis autour de l'axe de rotation, en face des pôles du rotor, lesdits bobinages étant excités séquentiellement pour créer un champ magnétique tournant entraînant en rotation ledit rotor,
- le stator est composé d'une pluralité de modules statoriques, chaque dit module statorique étant associé à au moins un bobinage susceptible de créer un champ magnétique lorsqu'il est traversé par un courant,
- chaque module statorique intègre sa propre unité de gestion électronique, ladite unité de gestion ne gérant que l'alimentation électrique dudit bobinage auquel ledit module est associé,
- chaque module statorique comprend un circuit imprimé sur lequel est directement fixée l'unité de gestion électronique.

Ce moteur est remarquable en ce que ledit au moins un bobinage est également directement fixé sur ledit circuit imprimé.

La fixation directe des bobinages sur les circuits imprimés permet de minimiser les coûts de câblages, facilite leurs refroidissements ainsi que leur changement éventuel en cas de défaillance, et simplifie le contrôle de leur fonctionnement, des capteurs prévus à cet effet pouvant aisément être intégrés sur lesdits circuits imprimés.

Le fait de segmenter le stator permet de rendre chaque module statorique totalement indépendant. De fait, si un des modules statoriques venait à être défectueux, le stator pourrait continuer à fonctionner avec les autres modules restants.

Egalement, chaque module statorique ne doit gérer que l'alimentation électrique de son propre bobinage, et non pas l'alimentation électrique de l'ensemble des bobinages du stator. Les composants utilisés peuvent donc être de petits calibres.

D'autres caractéristiques remarquables de l'invention sont listées ci-dessous, chacune de ces caractéristiques pouvant être considérée seule ou en combinaison avec les caractéristiques remarquables définies ci-dessus:
- les bobinages sont saillants, dépassant le plan des circuits imprimés sur lesquels ils sont fixés.
- chaque module statorique intègre plusieurs bobinages, chaque dit module comportant :
   ∘ une seule unité de gestion électronique susceptible d'alimenter électriquement tous les bobinages dudit module,
   ∘ ou une pluralité de sous-unités de gestion électronique, chaque sous-unité étant associée à un dit bobinage.
- les unités de gestion électronique des modules statoriques sont reliées à leur propre dispositif d'alimentation électrique.
- chaque dispositif d'alimentation électrique est directement fixé sur le circuit imprimé portant l'unité de gestion électronique à laquelle ledit dispositif est associé.
- chaque module statorique comporte un seul dispositif d'alimentation électrique susceptible d'alimenter électriquement tous les bobinages dudit module.
- chaque module statorique comporte plusieurs dispositifs d'alimentation électrique qui sont chacun associé à un des bobinages dudit module.
- les unités de gestion électronique des modules statoriques sont reliées à un dispositif d'alimentation électrique commun.
- un capteur de flux et/ou de température est fixé sur le circuit imprimé de chaque module statorique de façon à pouvoir contrôler le fonctionnement de chaque bobinage statorique.
- chaque unité de gestion électronique est reliée à un contrôleur ou superviseur commun ayant pour fonction de générer des instructions à destination de chacune desdites unités, ledit contrôleur ou superviseur commun intégrant une application informatique comportant des instructions pour piloter chaque dite unité selon trois modes de fonctionnement :
   ∘ un mode moteur où les bobinages sont excités par au moins un dispositif d'alimentation électrique, pour générer un couple moteur sur le rotor,
   ∘ un mode générateur où les bobinages ne sont pas excités, le passage des pôles aimantés devant lesdits bobinages générant un courant dans ces derniers, ledit courant étant utilisé pour recharger une ou plusieurs batteries,
   ∘ un mode inactif où les bobinages ne sont pas excités et sont isolés de toute source d'alimentation électrique.
- les pôles rotoriques intègrent chacun une paire d'aimants configurés pour se positionner de part et d'autre des extrémités des bobinages statoriques, l'excitation desdits bobinages conduisant à la génération d'un champ magnétique à chacune de leurs dites extrémités, ledit champ exerçant une force tangentielle attractive susceptible d'attirer lesdites paires d'aimants vers lesdites extrémités, et/ou une force tangentielle répulsive susceptible de repousser lesdites paires d'aimants, desdites extrémités. Les deux extrémités des bobinages peuvent alors servir à créer chacune une force tangentielle tendant à attirer ou repousser chaque paire d'aimants des pôles rotoriques. Chaque bobinage excité est donc susceptible de générer deux forces tangentielles, ce qui permet de doubler sensiblement le couple moteur. On obtient ainsi une structure double flux pour chaque module statorique indépendant.
- la paire d'aimants de chaque pôle rotorique est agencée sur les branches d'une structure en forme de U, lesdites branches étant susceptibles de se positionner de part et d'autre des bobinages du stator lorsque le rotor est mis en rotation.
- les aimants sont fixés symétriquement sur les branches, à l'intérieur de la structure en forme de U, cette dernière étant elle-même fixée sur la structure du rotor.
- les bobinages du stator ne sont pas identiques, lesdits bobinages ayant des fils de diamètres différents et/ou un nombre de spires différents.

Un autre aspect de l'invention concerne un véhicule terrestre, marin ou aérien, intégrant le moteur conforme à l'une des caractéristiques précédentes.

Ci-après il est fait référence à un procédé pour faire fonctionner un moteur électromagnétique sans balai comprenant un rotor monté mobile en rotation par rapport à un stator, et dans lequel ledit rotor comprend des pôles aimantés répartis radialement autour de l'axe de rotation dudit rotor, ledit stator comprend des bobinages présentant deux extrémités, lesdits bobinages étant répartis autour des pôles dudit rotor. On excite séquentiellement les bobinages statoriques pour créer un champ magnétique tournant entraînant en rotation le rotor. Ce procédé est remarquable en ce que :
- on segmente le stator en une pluralité de modules statoriques, chaque dit module statorique intégrant au moins un bobinage radial susceptible de créer un champ magnétique,
- on équipe chaque pôle rotorique d'une paire d'aimants configurés pour se positionner de part et d'autre des extrémités des bobinages statoriques,
- on commande l'alimentation électrique du bobinage de chaque module de manière indépendante des bobinages des autres dits modules,
- on excite des bobinages statoriques de façon à ce que le champ magnétique engendré à chacune de leurs extrémités exerce :
   ∘ une force tangentielle attractive susceptible d'attirer les paires d'aimants des pôles rotoriques, vers lesdites extrémités,
   ∘ et/ou une force tangentielle répulsive susceptible de repousser les paires d'aimants des pôles rotoriques, desdites extrémités.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 citée précédemment schématise l'architecture classique d'un moteur électromagnétique triphasé,
- la figure 2 schématise l'architecture d'un moteur électromagnétique triphasé conforme à l'invention,
- la figure 3 citée précédemment schématise des lignes de champ magnétique générées dans un bobinage parcouru par un courant électrique,
- la figure 4 est une vue schématique de face d'un stator conforme à l'invention,
- la figure 5 est une vue schématique de face d'un rotor conforme à l'invention,
- la figure 6 est une vue schématique de face montrant un moteur conforme à l'invention formé par l'agencement du stator de la figure 4 et du rotor de la figure 5,
- la figure 7 est une vue en coupe selon A-A de la figure 6, montrant le moteur conforme à l'invention dans une première variante de réalisation,
- la figure 8 est une vue en coupe selon A-A de la figure 6, montrant le moteur conforme à l'invention dans une seconde variante de réalisation,
- la figure 9a est une vue schématique en perspective montrant les lignes de champs générées dans un pôle rotorique muni de branches magnétiques formant un U, lorsqu'un bobinage statorique est agencé au milieu desdites branches,
- la figure 9b est une vue schématique en perspective montrant les lignes de champs générées dans deux pôles rotoriques munis de branches magnétiques formant un U, lorsque des bobinages statoriques sont agencés au milieu desdites branches,
- la figure 10 schématise les forces magnétiques en présence entre un bobinage statorique excité et un aimant rotorique, dans moteur électromagnétique de l'art antérieur,
- la figure 11 schématise les forces magnétiques en présence entre un bobinage statorique excité et une paire d'aimant rotorique, dans moteur électromagnétique conforme à l'invention.

### Modes de réalisation de l'invention.

L'invention concerne un moteur électromagnétique sans balai comprenant un stator et un rotor mobile en rotation par rapport audit stator. Ce moteur peut être intégré dans un véhicule terrestre (automobile, ...), marin (bateau, sous-marin, torpille, ...) ou aérien (avion, drone, hélicoptère, ULM, ...), ou dans tout autre appareil, par exemple des appareils électroménagers, des ventilateurs, des disques durs, des lecteurs de Cd-rom, des jouets radiocommandés, etc.

Un mode préférée de réalisation du stator et du rotor vont maintenant être décrits plus en détail.

### 1) Description d'un mode préféré de réalisation du stator.

Le stator peut être interne (moteur « brushless out-runner ») ou externe (moteur « brushless in-runner »). De manière classique, le stator comprend des bobinages régulièrement répartis autour de l'axe de rotation (A) du rotor (R), en face des pôles rotoriques. Les bobinages statoriques (B) présentent chacun deux extrémités (Bn, Bs) comme représenté sur la figure 3. Ces bobinages (B) sont susceptibles d'être excités séquentiellement pour créer un champ magnétique tournant entraînant en rotation le rotor.

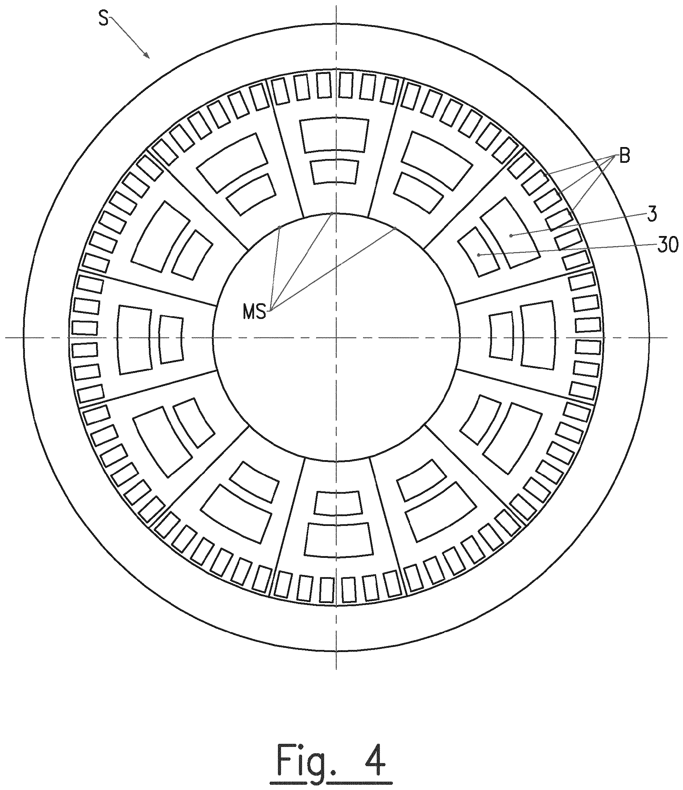

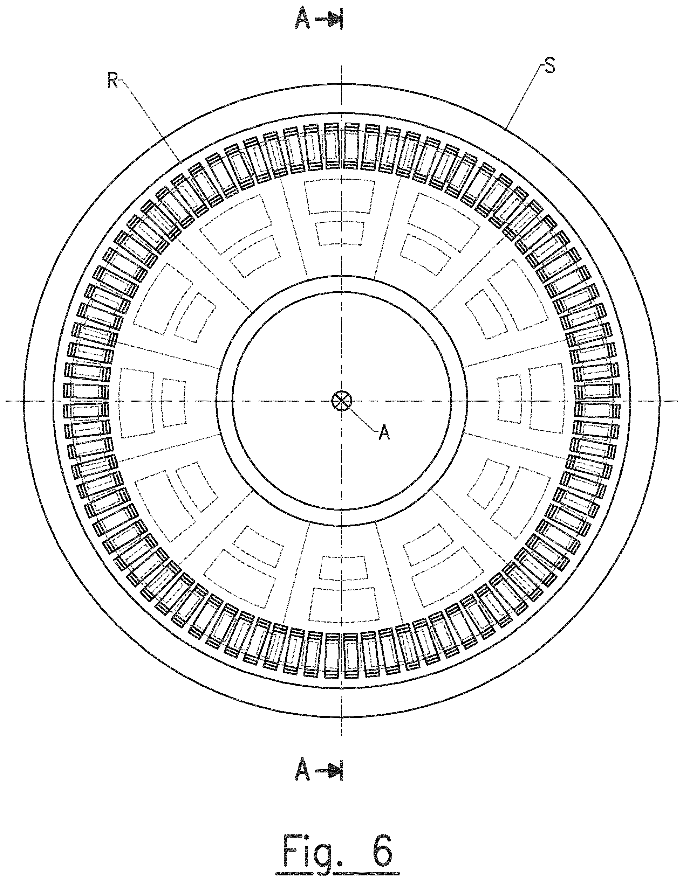

Selon un mode préféré de réalisation représenté sur les figures 4 et 6, le stator (S) est segmenté en une pluralité de modules statoriques (MS). Ce type de conception modulaire est exemple décrite dans les documents brevets suivants: US 2009/0256430 (FARINA), US 2005/0194845 (ENGQUIST), US 2002/0125782 (PEACHEE) ou GB 2462940 (PROTEAN HOLDING CORP). Cette modularité du stator permet de faciliter sa conception et son assemblage. Sur la figure 4, le stator (S) est composé de douze modules (MS), mais un nombre supérieur ou inférieur de modules peut être prévu. On peut toutefois prévoir d'utiliser un stator (S) classique, non modulaire, où les bobinages (B) sont solidaires d'une même structure magnétique, sans remettre en cause la redondance des étages de commandes et des entrées d'alimentations décrites ci-après.

En pratique, le stator (S) peut comprendre une structure rigide se présentant sous la forme d'un disque ou d'une couronne fixe, réalisé en une ou plusieurs parties. Les modules statoriques (MS) se présentent sous la forme de secteurs annulaires identiques, isolés les uns des autres, et fixés de manière temporaire ou permanente sur la structure rigide du stator (S).

Chaque module statorique (MS) intègre au moins un bobinage (B), préférentiellement radial, susceptible de créer un champ magnétique lorsqu'il est traversé par un courant. Par bobinage « radial » on entend au sens de la présente invention un bobinage dont l'axe est parallèle aux rayons du stator (S). Sur les figures 4, 6, 7 et 8, les bobinages (B) sont disposés sur les faces latérales du stator (S), à la périphérie de ce dernier. On pourrait toutefois prévoir de disposer les bobinages (B) sur la bordure intérieure (pour un moteur « in-runner) ou extérieure (pour un moteur « out-runner ») du stator (S). Sur les figures 4 et 6, chaque module (MS) comporte 6 bobinages (B), le stator (S) comprenant donc 72 (6x12) bobinages. Toutefois, un nombre supérieur ou inférieur de bobinages (B) peut être prévu. Les bobinages (B) d'un même module (MS) sont reliés selon une configuration en étoile ou en triangle dans le cas d'une excitation triphasée. Une configuration en étoile à plus de trois branches ou tous autre configuration convenant à l'homme du métier peut être utilisée dans le cas d'une excitation polyphasée. Les bobinages (B) du stator (S) sont préférentiellement tous identiques (mis à part leur sens de bobinage qui peut être différent), et peuvent être facilement réalisés en série, ce qui diminue leur coût unitaire. Dans une variante de réalisation, les bobinages (B) peuvent être différenciés, c'est-à-dire qu'ils peuvent avoir des fils de diamètre différents et/ou un nombre de spires différent.

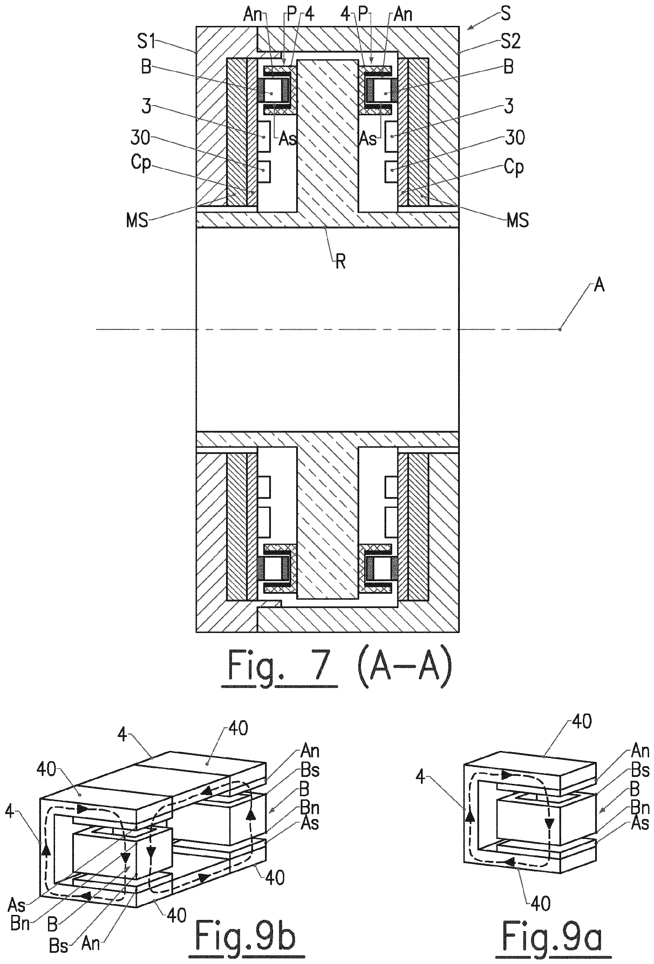

En se rapportant à la figure 7, le stator (S) peut comprendre deux parties annulaires (S1, S2) coaxiales, et entre lesquelles est agencé le rotor (R). Les parties annulaires (S1, S2) font partie de la structure rigide du stator sur lesquelles sont fixés les modules statoriques (MS). Les parties annulaires (S1, S2) peuvent être fixées l'une à l'autre au moyen d'une bride ou tous autres moyens de fixation équivalents. Le rotor (R) comporte des pôles rotoriques (P) agencés sur chacune de ses faces latérales. Les modules statoriques (MS) sont disposés sur la face interne des parties annulaires (S1, S2) de sorte que les bobinages (B) soient en regard des pôles rotoriques (P). Dans cette configuration, le moteur comporte donc deux rangées de couples « bobinages statorique - pôles rotoriques », qui peuvent être parallèles ou décalées angulairement, afin notamment de favoriser la réduction des ondulations de couples grâce à un entrelacement des phases actives de chacun des modules statoriques (MS). On peut ainsi envisager un moteur multi-étages comprenant un stator et un rotor formés de plusieurs parties annulaires et comprenant plus deux rangées de bobinages (B) et de pôles rotoriques (P).

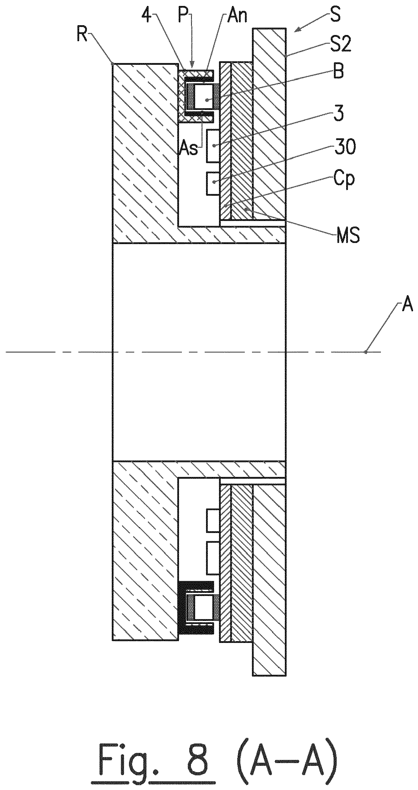

Dans une variante de réalisation représentée sur la figure 8, le stator (S) comprend une seule partie annulaire qui fait partie de la structure rigide dudit stator sur laquelle sont fixés les modules statoriques (MS). Le rotor (R) comporte des pôles rotoriques (P) agencés sur une seule de ses faces latérales. Les modules statoriques (MS) sont disposés sur la face interne de la partie annulaire du stator (S) de sorte que les bobinages (B) soient en regard des pôles rotoriques (P). Dans cette configuration, le moteur ne comporte qu'une seule rangée de couples « bobinages statorique - pôles rotoriques ».

La détermination du nombre de modules statoriques (MS) et/ou du nombre de rangées et/ou du nombre de bobinages statoriques (B) et/ou du nombre de pôles rotoriques (P), dépend de la puissance nominale à convertir et du calibre des composants électroniques utilisés. Compte tenu de la division des puissances induite par l'invention, un ensemble de 3 à 100 modules statoriques (MS) peut être suffisant pour équiper un moteur de 10 à 100 KW. La synchronisation de l'excitation des différents bobinages (B) permet de générer un champ magnétique tournant comme cela est expliqué plus en détail ci-après.

Un dispositif de gestion électronique commande l'alimentation électrique des bobinages statoriques (B). En pratique, les courants d'alimentation des bobinages statoriques (B) sont réglés de manière à ce qu'ils forment des vecteurs champs magnétiques qui se déplacent dans le sens de la rotation voulue du rotor (R).

Selon une caractéristique avantageuse de l'invention schématisée sur la figure 4, chaque module statorique (MS) intègre sa propre unité de gestion électronique (3), de façon à ce que l'alimentation électrique de chaque bobinage (B), ou de chaque groupe de bobinage d'un module, soit commandée de manière indépendante des bobinages des autres modules. Chaque unité de gestion (3) ne gère donc que l'alimentation électrique du bobinage (B) auquel son module statorique (MS) est associé. En particulier, il est envisageable que chaque module statorique (MS) comporte une seule unité de gestion électronique (3) susceptible d'alimenter électriquement tous les bobinages (B) dudit module. Il est également envisageable que chaque module statorique (MS) comporte une pluralité de sous-unités de gestion électronique (3), chaque sous-unité étant associée à un bobinage (B) dudit module. Par « intégrer », on entend au sens de la présente invention que les unités de gestion électronique (3) sont directement supportées par les modules statoriques (MS) et non pas déportées sur une autre structure du stator (S) ou en dehors de celui-ci, comme cela peut être le cas dans certains moteurs de l'art antérieur.

Ainsi, si une ou plusieurs des unités de gestion électronique (3) sont défectueuses, les autres unités pourront contrebalancer partiellement ou totalement la diminution de couple induit par la ou les unités défaillantes. Egalement, les courants dans chaque phase, contrôlés par des unités de gestion électronique indépendantes, sont maintenant beaucoup plus faibles que dans une architecture standard. Cela permet d'utiliser notamment des transistors de puissance moins nombreux, à faibles coûts et de diminuer les pertes thermiques (proportionnelles à I²). En outre, l'intégration des unités de gestion électronique (3) directement dans le stator (S), permet d'utiliser le même système de refroidissement (air, eau) pour les bobinages (B) et les transistors de puissances, d'où une simplification de l'intégration du moteur dans le véhicule (dimension plus faible, conduit d'eau unique, ...). Le principe de cette gestion redondante des bobinages (B) est par exemple décrite dans les documents brevets suivants : FR 2.493.059 (KOLLMORGEN TECHNOLOGIES CORPORATION), GB 2462940 (PROTEAN HOLDING CORP.), US 2004/0021437 (MASLOV) ou encore WO 94/14226 (HONEYWELL).

En se rapportant aux figures 7 et 8, les unités de gestion électronique (3) sont fixées sur des circuits imprimés (Cp). Ces derniers sont eux-mêmes fixés sur une des faces latérales de la structure des modules statoriques (MS). Les circuits imprimés (Cp) peuvent également formés directement la structure des modules statoriques (MS) auquel cas, ils sont directement fixés sur la structure rigide formant le stator (S). La fixation des circuits imprimés (Cp) sur l'une ou l'autre de ces structures se fait par vissage ou collage. En pratique, les circuits imprimés (Cp) ont la forme de secteurs annulaires correspondant à celle des modules statoriques (MS). Selon l'agencement souhaité des bobinages (B), on peut toutefois prévoir de fixer ces circuits imprimés (Cp) sur la bordure intérieure ou extérieure de la structure des modules statoriques (MS) ou de la structure rigide formant le stator (S). Les bobinages (B) sont directement soudés sur ces circuits imprimés (Cp) afin de minimiser les coûts de câblages, ainsi que pour faciliter leurs refroidissements sur la partie du stator (S) ventilée. En outre, le fait de proposer des modules statoriques (MS) indépendants, intégrant chacun non seulement une unité de gestion (3) mais également au moins un bobinage (B), permet de faciliter l'entretien du moteur. En effet, en cas de défaillance d'un de ces composants, il est possible de remplacer rapidement le module statorique faisant défaut par un autre module en état de fonctionnement. Il n'est ni nécessaire d'intervenir sur les autres modules statoriques (MS), ni nécessaire d'effectuer un quelconque câblage entre le nouveau bobinage et la nouvelle unité de gestion. Sur les figures 7 et 8, les bobinages (B) sont saillants, dépassant le plan du circuit imprimé (Cp) sur lequel ils sont fixés.

Un certain nombre de composants électroniques, et notamment des transistors assemblés en pont en « H », MOSFET ou IGBT, utilisés comme commutateur électronique, des microcontrôleurs, des régulateurs, des résistances et condensateurs, ..., sont également soudés sur ces circuits imprimés (Cp) de façon à ce que les unités de gestion électronique (3) puissent réaliser l'ensemble des fonctions souhaitées. Un ou plusieurs processeurs ou microprocesseurs intégrants des programmes susceptibles de générer des instructions de commandes en fonctions des différents signaux reçus, peuvent notamment être prévus. Etant donné que chaque unité de gestion électronique (3) gère un unique bobinage (B), ou un unique groupe de bobinages, les puissances traitées par les composants électroniques, et notamment par les transistors, sont relativement faibles (typiquement de l'ordre de 1000 Watts), ce qui permet d'utiliser des composants de faibles coûts, par exemple du type que l'on utilise dans des appareils d'électroménagers, sans que cela nuise à la fiabilité du moteur électrique. Les différents composants des unités de gestion électronique (3) seront refroidis par convection avec le stator (S), lui-même préférentiellement refroidi par une turbine soufflante ou par une circulation d'eau (en fonction de la puissance).

Chaque unité de gestion électronique (3) peut être reliée à un contrôleur ou superviseur commun ayant pour fonction de générer des instructions à destination de chacune desdites unités, de façon à moduler la puissance du courant électrique alimentant chaque bobinage (B) et synchroniser l'alimentation de chaque dit bobinage en fonction de la position du rotor (R). En pratique ce contrôleur comprend un ou plusieurs processeurs ou microprocesseurs intégrants des programmes susceptibles de générer des instructions de commandes à destination des unités de gestion électronique (3) en fonction de différents signaux transmis par lesdites unités ou transmises par un autre organe de commande et/ou capteur de position du rotor (R). Le contrôleur peut par exemple envoyer des instructions de façon à ce que l'excitation des bobinages (B) fasse tourner le rotor (R) plus ou moins vite, dans un sens ou dans l'autre, etc. Le contrôleur est préférentiellement configuré pour générer des instructions en fonction de l'état de fonctionnement de chaque module statorique (MS). Par exemple, si le contrôleur détecte la défaillance d'un des modules statoriques (MS), il peut transmettre des instructions aux unités de gestion électronique (3) des autres modules statoriques de façon à ce que la puissance du courant électrique alimentant les bobinages (B) encore en état de fonctionnement, permette de conserver la même vitesse de rotation et/ou le même couple moteur.

Une source de courant permet d'exciter les bobinages (B) pour créer un champ magnétique et alimenter les différents composants des unités de gestion électronique (3). Ces dernières sont préférentiellement reliées à leur propre dispositif d'alimentation électrique (30) de façon à les rendre autonomes. Comme représenté sur les figures 4 à 9, chaque dispositif d'alimentation électrique (30) est avantageusement directement fixé sur le circuit imprimé (Cp) portant l'unité de gestion électronique (3) à laquelle il est associé. Ces dispositifs d'alimentation (30) peuvent consister en une ou plusieurs batteries ou piles à combustibles. Certaines unités de gestion (3) peuvent être reliées à des batteries tandis que d'autres peuvent être reliées à des piles à combustible. Il est envisageable que chaque module statorique (MS) comporte un seul dispositif d'alimentation électrique (30) susceptible d'alimenter électriquement tous les bobinages (B) dudit module. Chaque module statorique (MS) peut également comporter plusieurs dispositifs d'alimentation électrique qui sont chacun associé à un des bobinages (B) dudit module. Dans une variante de réalisation, toutes les unités de gestion électronique (3) peuvent être reliées à un unique dispositif d'alimentation électrique commun à tous les modules statoriques (MS). Ce dispositif d'alimentation électrique commun peut être fixé sur la structure du stator (S) ou en dehors de ce dernier.

La redondance de l'alimentation électrique des bobinages (B) est donc possible mais pas indispensable, en fonction du niveau de sécurité souhaité. Cette architecture redondante de l'alimentation électrique permet également une simplification des moyens de gestion (ou BMS pour l'anglais « Battery Management System ») des packs de batteries composées de plusieurs cellules. Il est en effet possible de gérer la consommation électrique sur chaque cellule, d'où une simplification des BMS. La balance de chaque pack de batteries peut être réalisée en contrôlant le courant consommé par chaque unité de base, ce qui est plus efficace et plus simple que les technologies de balances actuelles. De plus, il est possible de recharger un pack de batteries unique, en faisant fonctionner les unités de gestion électronique (3) en mode générateur, permettant encore une simplification de l'électronique de balance. Ce mode générateur intervient lorsqu'un bobinage (B) n'est pas excité mais que le rotor (R) est mis en rotation par d'autres bobinages excités : en passant devant ledit bobinage, les pôles rotoriques aimantés (P) génèrent un courant dans ce dernier qui peut servir à recharger une ou plusieurs batteries. Un troisième mode inactif peut être envisagé et dans lequel les bobinages (B) ne sont pas excités et sont isolés de toute source d'alimentation électrique. En pratique, le contrôleur ou superviseur commun intègre une application informatique comportant des instructions, qui, lorsqu'elles sont exécutées par un processeur, permettent de piloter le mode de fonctionnement de chaque unité de gestion électronique (3). Il est ainsi possible de configurer le mode de fonctionnement de chaque unité de gestion électronique (3) de façon à ce que certaines unités fonctionnent en mode moteur tandis que simultanément d'autres fonctionnent en mode générateur ou en mode inactif. En pratique, lorsque le moteur est sollicité à sa puissance maximale, toutes les unités de gestion (3) fonctionnent en mode moteur. Lorsque le moteur est sollicité dans une moindre mesure, certaines unités de gestion (3) fonctionnent en mode moteur en étant alimentées par une première source de courant (par exemple : une pile à combustible) alors que d'autres fonctionnent simultanément en mode générateur pour recharger une autre source de courant (par exemple : une ou plusieurs batteries).

En outre, la différenciation des bobinages (B) de certaines unités de gestion (3) (par exemple en modifiant le diamètre des fils, le nombre de spires, ...), permet de générer des tensions différentes. En effet, on génère des tensions plus élevées avec des bobinages ayant des fils de petit diamètre et un nombre de spires important, qu'avec des bobinages ayant des fils de diamètre important et un nombre de spires réduit. Il est alors possible d'utiliser un mode de fonctionnement mixte (mode moteur et mode générateur) pour permettre le transfert de charge entre des sources de courant ayant des tensions très différentes, sans utilisation d'un convertisseur DC/DC.

La commande du sens du courant dans les bobinages (B) de chaque phase permet de générer un champ magnétique tournant. Ce champ doit être synchronisé avec la position du rotor (R) afin de permettre sa rotation et obtenir le couple maximum sur l'axe de sortie (A). Des capteurs à effet hall (non représentés) sont par exemple utilisés pour connaitre à tout moment la position du rotor (R), et adapter en conséquence l'alimentation des bobinages (B) et le champ magnétique. Les capteurs vont détecter le passage d'un pôle rotorique (P) et, à partir cette information, les unités de gestion électronique (3) assureront la commutation des bobinages (B). Des bobinages non alimentés à un instant donné peuvent également servir à mesurer la force contre électromotrice et en déduire le moment pour déclencher la commutation.

Pour réguler la vitesse du moteur, on fait varier la tension d'alimentation de chaque bobinage (B), tout en maintenant une fréquence de commutation adaptée à la fréquence de rotation mesurée du rotor (R). En pratique, les unités de gestion électronique (3) intègrent deux fonctions : commutation des bobinages (B) en fonction des données des capteurs de position du rotor (R), et régulation de la vitesse en modulant la largeur d'impulsion (ou PWM pour l'anglais : Pulse Width Modulation) sur l'alimentation de chaque dit bobinage.

Pour résumer, la conception modulaire du stator permet de considérer le moteur objet de l'invention comme étant un nombre X (X=3 dans l'exemple de la figure 2) d'arrangements bobinages/aimants. Ces arrangements sont indépendants les unes des autres en commande et éventuellement également en alimentation. Ainsi, en comparant les schémas des figures 1 et 2, un moteur constitué de trois arrangements bobinages/aimants, d'une électronique de commande commune (EC) à sortie triphasée (U, V, W) et d'un dispositif d'alimentation électrique unique (DE), deviendra, un moteur toujours constitué de trois arrangements bobinages/aimants, mais piloté par trois électroniques de commande distinctes (EC1, EC2, EC3) à sortie triphasée (U, V, W) et d'un ou trois dispositifs d'alimentation électrique (DE1, DE2, DE3). Ces trois arrangements triphasés partagent le même rotor, mais n'ont aucune partie électrique commune, ce qui permet une redondance globale du moteur. Le stator (S) est ainsi formé par un ensemble de modules statoriques (MS) formant chacun un élément unitaire et indépendant, portant sa propre unité de gestion (3), son propre (ou ses propres) bobinage (B) et éventuellement son propre (ou ses propres) dispositif d'alimentation électrique (30). En cas de défaillance de l'un de ces éléments, il suffit de le remplacer par un autre élément identique en état de fonctionnement. Ce changement se fait rapidement et individuellement.

### 2) Description d'un mode préféré de réalisation du rotor.

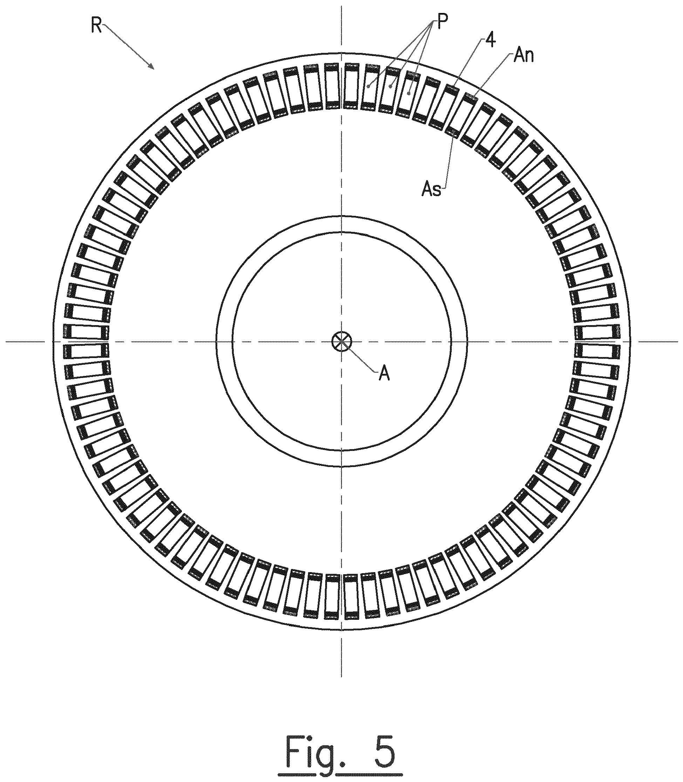

Dans l'exemple de réalisation schématisé sur les figures 5 et 6, le rotor (R) comporte des pôles aimantés (P) répartis radialement autour de l'axe de rotation (A) dudit rotor. Les pôles rotoriques (P) comporte des aimants, et préférentiellement des aimants permanents.

Le rotor (R) comprend un nombre pair ou impair de pôles (P), préférentiellement supérieur au nombre de bobinages statoriques (B), de façon à présenter un pas différent de celui du stator (S). Dans l'exemple des figures 4 à 6, le stator comprend 72 bobinages (B) et le rotor 84 pôles aimantés (P).

Conformément à l'invention, les pôles rotoriques (P) intègrent chacun une paire d'aimants (An, As) configurés pour se positionner de part et d'autre des extrémités magnétiques (Bn, Bs) des bobinages statoriques (B). On notera que cette conception du rotor (R) est techniquement dissociable de la conception modulaire du stator décrite précédemment, les deux dites conceptions pouvant être envisagées isolément par l'homme du métier. Toutefois, la conception modulaire du stator combinée à la conception particulière du rotor, permet d'obtenir un effet synergique, notamment quant à la fiabilité du moteur.

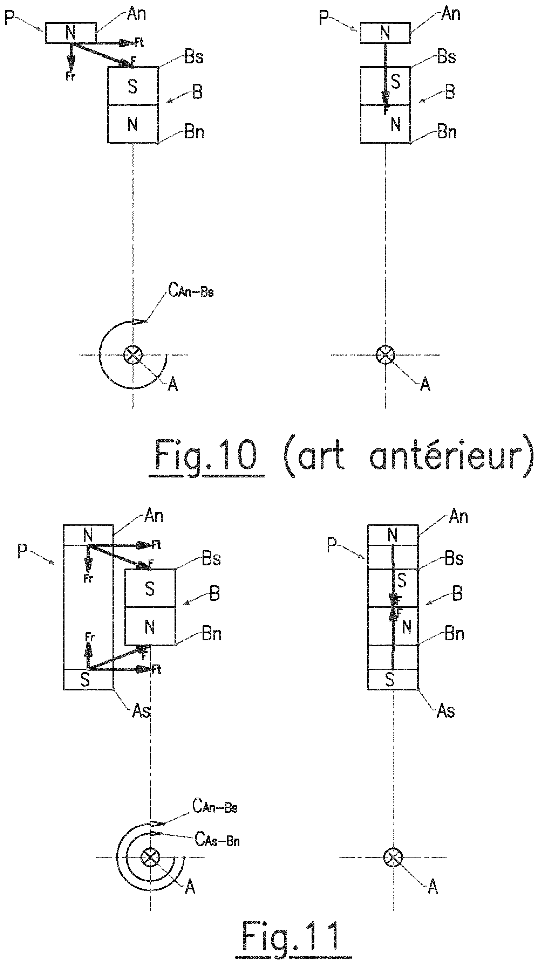

Les aimants (An, As) de chaque pôle rotorique (P) ont leur polarité inversée par rapport à celle des extrémités des bobinages (B) excités avec lesquelles ils sont en regard. En pratique, les bobinages statoriques (B) sont excités de façon à ce que le champ magnétique engendré à chacune de leurs extrémités (Bn, Bs) exerce une force tangentielle attractive susceptible d'attirer les aimants (An, As) vers lesdites extrémités. Cet état des choses sera mieux compris en se référant à l'exemple de la figure 11. Sur le schéma de gauche, un pôle rotorique (P) est dans une position décalée avec un bobinage statorique (B). Ce dernier est excité de manière à ce que son extrémité supérieure (Bs) ait par exemple une polarité Sud et son extrémité inférieure (Bn) une polarité Nord. Le pôle rotorique (P) présente une paire d'aimants (An, As). L'aimant supérieur (An), destiné à être en regard de l'extrémité supérieure (Bs) du bobinage statorique (B), présente une polarité Nord. L'aimant inférieur (As) présente une polarité Sud. Dans cette configuration, lorsque le bobinage statorique (B) est excité, le champ magnétique engendré exerce, à chacune des extrémités (Bs, Bn), une force attractive (F) agissant sur chacun des aimants (An, As) du pôle rotorique (P). Ce dernier est donc soumis à 2 forces attractives (F). Le pôle rotorique (P) étant décalé du bobinage statorique (B), ces forces (F) comportent chacune une composante radiale (Fr) et une composante tangentielle (Ft), cette dernière étant susceptible d'attirer les aimants (An) et (As), respectivement vers les extrémités (Bs) et (Bn). Chacune des forces tangentielles (Ft) exerce ainsi sur l'axe de rotation (A) du rotor : un premier couple moteur (C_{An-Bs}) pour l'ensemble aimant supérieur (An)/extrémité supérieure (Bs) et un second couple moteur (C_{As-Bn}) pour l'ensemble aimant inférieur (As)/extrémité inférieure (Bn). On notera que le bras de levier étant supérieur pour l'ensemble : aimant supérieur (An)/extrémité supérieure (Bs) que pour l'ensemble aimant inférieur (As)/extrémité inférieure (Bn), alors le couple moteur (C_{An-Bs}) est supérieur au couple moteur (C_{As-Bn}).

Sur le schéma de droite, le rotor a pivoté de sorte que le pôle rotorique (P) est dans une position alignée avec le bobinage statorique (B). Les forces (F) n'ont qu'une composante radiale. Aucun couple moteur n'est exercé sur l'axe de rotation (A) du rotor. Lorsque cet alignement est réalisé, le courant dans le bobinage statorique (B) est coupé et un autre bobinage est excité. On créé ainsi un champ magnétique tournant successible d'entraîner en rotation le rotor.

Un résultat similaire est bien évidemment obtenu lorsque les bobinages statoriques (B) sont excités de façon à ce que le champ magnétique engendré à chacune de leurs extrémités (Bs, Bn) exerce une force tangentielle répulsive susceptible de repousser les aimants (An, As), desdites extrémités. Et le couple moteur global obtenu sur l'axe de rotation (A) peut être optimal si concomitamment, certains bobinages statoriques (B) sont excités de façon à exercer des forces tangentielles répulsives susceptibles de repousser les aimants de certains pôles rotoriques, tandis que d'autres bobinages statoriques sont excités de façon à exercer des forces tangentielles attractives susceptibles d'attirer les aimants d'autres pôles rotoriques.

A contrario, la figure 10 schématise les forces exercées dans un moteur de l'art antérieur. Sur le schéma de gauche, un pôle rotorique (P) est dans une position décalée avec un bobinage statoriques (B). Ce dernier est excité de manière à ce que son extrémité supérieure (Bs) ait une polarité Sud et son extrémité inférieure (Bn) une polarité Nord. Le pôle rotorique (P) présente un seul aimant (An). Ce dernier, destiné à être en regard de l'extrémité supérieure (Bs) du bobinage statorique (B), présente une polarité Nord. Dans cette configuration, lorsque le bobinage statorique (B) est excité, le champ magnétique engendré exerce, uniquement au niveau de son extrémité supérieure (Bs), une force attractive (F). Le pôle rotorique (P) étant décalé du bobinage statorique (B), cette force (F) comporte une composante radiale (Fr) et une composante tangentielle (Ft), cette dernière étant susceptible d'attirer l'aimant (An) vers l'extrémité (Bs). La force tangentielle (Ft) exerce un unique couple moteur (C_{An-Bs}) sur l'axe de rotation (A) du rotor. Sur le schéma de droite, le rotor à pivoter de sorte que le pôle rotorique (P) est dans une position alignée avec le bobinage statorique (B). La force (F) n'a qu'une composante radiale. Aucun couple n'est exercé sur l'axe de rotation (A) du rotor.

Avec un moteur de l'art antérieur, dans la position décalée ou alignée, la composante radiale (Fr) génère une contrainte mécanique au niveau du rotor. Il est donc nécessaire de renforcer la structure de ce dernier pour lui permettre de supporter cette contrainte, ce renforcement augmentant, de fait, le poids dudit rotor. A l'inverse, dans le moteur objet de l'invention, les composantes radiales (Fr) s'annulent, minimisant les contraintes sur le rotor. Il n'est donc pas nécessaire de renforcer la structure ce dernier, ce qui permet d'alléger le poids dudit rotor. En résumé, le moteur objet de l'invention, permet non seulement d'augmenter le couple moteur, amis encore d'alléger la structure du rotor et dudit moteur. La puissance massique du moteur (W/Kg) est donc augmentée.

En comparant les figures 10 et 11, on s'aperçoit que le couple moteur global (C_{An-Bs}) exercé sur l'axe de rotation (A) du rotor d'un moteur de l'art antérieur (figure 10) sera toujours inférieur au couple moteur global (C_{An-Bs} + C_{As-Bn}) exercé sur l'axe de rotation du rotor du moteur objet de l'invention (figure 11). En effet, dans un moteur de l'art antérieur, une seule extrémité des bobinages est active (générant un seul couple moteur) tandis que dans le moteur objet de l'invention, les deux extrémités le sont (générant deux couples moteurs).

En pratique, et en se rapportant aux figures 7 à 9, la paire d'aimants (An, As) de chaque pôle rotorique (P) est agencée sur les branches (40) d'une structure (4) en forme de U. Cette dernière peut être réalisée en poudre de matériau composite magnétique doux (SMC) ou en poudre de matériau fritté (SPM), ou en acier électrique feuilleté, ou en tout autre matériau magnétique équivalent convenant à l'homme du métier. Les aimants (An, As) sont fixés symétriquement par collage, vissage ou autre, sur les branches (40), à l'intérieur de la structure (4). Cette dernière peut être elle-même fixée par collage, vissage, soudage, ou autre sur la structure du rotor (R) ou faire partie intégrante de ladite structure.

Les branches (40) sont configurées de manière à pouvoir se positionner de part et d'autre des bobinages statoriques (B) lorsque le rotor (R) est mis en rotation. Typiquement, les branches (40) sont écartées de manière à ce qu'une fois équipées des aimants (An, As), l'espace restant disponible soit légèrement supérieur à la hauteur des bobinages statoriques (B). La largeur des branches (40) et des aimants (An, As) correspondent sensiblement à celle des bobinages statoriques (B).

En se rapportant à la figure 9a, les bobinages statoriques (B) sont excités de sorte que les champs magnétiques engendrés (représentés par les lignes en pointillés) se bouclent sur les structures (4) en forme de U des pôles rotoriques (P) décalés, et exercent une force tangentielle sur lesdits pôles afin de les attirer vers une position alignée dans laquelle les bobinages (B) sont situés au milieu des branches (40) desdites structures. En se rapportant à la figure 9b, les champs magnétiques engendrés (représentés par les lignes en pointillés) se bouclent également sur les structures (4) en forme de U voisine, car les bobinages statoriques (B) sont agencés de sorte que les pôles (Bs) et (Bn) de deux bobinages adjacents soient inversés. Ainsi, il y a une circulation du flux magnétique dans les structures (4) en forme de U et entre deux dites structures adjacentes, ce qui tend à augmenter encore le couple moteur induit.

### Documents connus de l'art antérieur.

WO 94/14226 (HONEYWELL)
US 2009/0256430 (FARINA)
US 2005/0194845 (ENGQUIST)
US 2002/0125782 (PEACHEE)
US 2004/0021437 (MASLOV)
FR 2.493.059 (KOLLMORGEN TECHNOLOGIES CORPORATION)
FR 2.852.162 (LEROY SOMER MOTEURS)
GB 2462940 (PROTEAN HOLDING CORP)

## Revendications

1. Moteur électromagnétique sans balai comprenant un stator (S) et un rotor (R) mobile en rotation par rapport audit stator, et dans lequel :
- le rotor (R) comprend des pôles aimantés (P) répartis radialement autour de l'axe de rotation (A) dudit rotor,
- le stator (S) comprend des bobinages (B) présentant deux extrémités (Bn, Bs), lesdites extrémités présentant des polarités inversées lorsque lesdits bobinages sont excités, lesdits bobinages étant répartis autour de l'axe de rotation (A), en face des pôles (P) du rotor (R), lesdits bobinages étant excités séquentiellement pour créer un champ magnétique tournant entraînant en rotation ledit rotor,
- le stator (S) est composé d'une pluralité de modules statoriques (MS), chaque dit module statorique étant associé à au moins un bobinage (B) susceptible de créer un champ magnétique lorsqu'il est traversé par un courant,
- chaque module statorique (MS) intègre sa propre unité de gestion électronique (3), ladite unité de gestion ne gérant que l'alimentation électrique dudit bobinage (B) auquel ledit module est associé,
- chaque module statorique (MS) comprend un circuit imprimé (Cp) sur lequel est directement fixée l'unité de gestion électronique (3), **se caractérisant par le fait que** ledit au moins un bobinage (B) est également directement fixé sur ledit circuit imprimé.

2. Moteur selon la revendication 1, dans lequel les bobinages (B) sont saillants, dépassant le plan des circuits imprimés (Cp) sur lesquels ils sont fixés.

3. Moteur selon l'une des revendications précédentes, dans lequel chaque module statorique (MS) intègre plusieurs bobinages (B), chaque dit module comportant :
- une seule unité de gestion électronique (3) susceptible d'alimenter électriquement tous les bobinages (B) dudit module,
- ou une pluralité de sous-unités de gestion électronique, chaque sous-unité étant associée à un dit bobinage.

4. Moteur selon l'une des revendications précédentes, dans lequel les unités de gestion électronique (3) des modules statoriques (MS) sont reliées à leur propre dispositif d'alimentation électrique (30).

5. Moteur selon la revendication 4, dans lequel chaque dispositif d'alimentation électrique (30) est directement fixé sur le circuit imprimé (Cp) portant l'unité de gestion électronique (3) à laquelle ledit dispositif est associé.

6. Moteur selon la revendication 5, dans lequel chaque module statorique (MS) comporte un seul dispositif d'alimentation électrique (30) susceptible d'alimenter électriquement tous les bobinages (B) dudit module.

7. Moteur selon la revendication 5, dans lequel chaque module statorique (MS) comporte plusieurs dispositifs d'alimentation électrique (30) qui sont chacun associé à un des bobinages (B) dudit module.

8. Moteur selon l'une des revendications 1 à 3, dans lequel les unités de gestion électronique (3) des modules statoriques (MS) sont reliées à un dispositif d'alimentation électrique commun.

9. Moteur selon l'une des revendications précédentes, dans lequel un capteur de flux et/ou de température est fixé sur le circuit imprimé de chaque module statorique (MS) de façon à pouvoir contrôler le fonctionnement de chaque bobinage statorique (B).

10. Moteur selon l'une des revendications précédentes, dans lequel chaque unité de gestion électronique (3) est reliée à un contrôleur ou superviseur commun ayant pour fonction de générer des instructions à destination de chacune desdites unités, ledit contrôleur ou superviseur commun intégrant une application informatique comportant des instructions pour piloter chaque dite unité selon trois modes de fonctionnement :
- un mode moteur où les bobinages (B) sont excités par au moins un dispositif d'alimentation électrique, pour générer un couple moteur sur le rotor (R),
- un mode générateur où les bobinages (B) ne sont pas excités, le passage des pôles aimantés (P) devant lesdits bobinages générant un courant dans ces derniers, ledit courant étant utilisé pour recharger une ou plusieurs batteries,
- un mode inactif où les bobinages (B) ne sont pas excités et sont isolés de toute source d'alimentation.

11. Moteur selon l'une des revendications précédentes, dans lequel les pôles rotoriques (P) intègrent chacun une paire d'aimants (An, As) configurés pour se positionner de part et d'autre des extrémités (Bn, Bs) des bobinages statoriques (B), l'excitation desdits bobinages conduisant à la génération d'un champ magnétique à chacune de leurs dites extrémités, ledit champ exerçant une force tangentielle attractive susceptible d'attirer lesdites paires d'aimants vers lesdites extrémités, et/ou une force tangentielle répulsive susceptible de repousser lesdites paires d'aimants, desdites extrémités.

12. Moteur selon la revendication 11, dans lequel la paire d'aimants (An, As) de chaque pôle rotorique (P) est agencée sur les branches (40) d'une structure (4) en forme de U, lesdites branches étant susceptibles de se positionner de part et d'autre des bobinages (B) du stator (S) lorsque le rotor (R) est mis en rotation.

13. Moteur selon la revendication 12, dans lequel les aimants (An, As) sont fixés symétriquement sur les branches (40), à l'intérieur de la structure (4) en forme de U, cette dernière étant elle-même fixée sur la structure du rotor (R).

14. Moteur selon l'une des revendications précédentes, dans lequel les bobinages (B) du stator ne sont pas identiques, lesdits bobinages ayant des fils de diamètres différents et/ou un nombre de spires différents.

15. Véhicule terrestre, marin ou aérien, **se caractérisant par le fait qu'**il intègre le moteur conforme à l'une des revendications 1 à 14.

## Patentansprüche

1. Bürstenloser elektromagnetischer Motor, welcher einen Stator (S) und einen bezüglich des Stators drehbeweglichen Rotor (R) umfasst, und wobei:
- der Rotor (R) magnetisierte Pole (P) umfasst, die radial um die Drehachse (A) des Rotors verteilt sind,
- der Stator (S) Wicklungen (B) umfasst, die zwei Enden (Bn, Bs) aufweisen, wobei die Enden umgekehrte Polaritäten aufweisen, wenn die Wicklungen erregt sind, wobei die Wicklungen um die Drehachse (A) verteilt sind, gegenüber den Polen (P) des Rotors (R), wobei die Wicklungen nacheinander erregt werden, um ein rotierendes Magnetfeld zu erzeugen, das den Rotor drehend antreibt,
- der Stator (S) aus mehreren Statormodulen (MS) besteht, wobei jedes solche Statormodul wenigstens einer Wicklung (B) zugeordnet ist, die in der Lage ist, ein Magnetfeld zu erzeugen, wenn sie von einem Strom durchflossen wird,
- in jedes Statormodul (MS) eine eigene elektronische Managementeinheit (3) integriert ist, wobei diese Managementeinheit nur die Stromversorgung der Wicklung (B) steuert, welcher das Modul zugeordnet ist,
- jedes Statormodul (MS) eine Leiterplatte (Cp) umfasst, auf welcher die elektronische Managementeinheit (3) direkt befestigt ist, **dadurch gekennzeichnet, dass** die wenigstens eine Wicklung (B) ebenfalls direkt auf der Leiterplatte befestigt ist.

2. Motor nach Anspruch 1, wobei die Wicklungen (B) vorstehend sind, wobei sie über die Ebene der Leiterplatten (Cp), auf denen sie befestigt sind, hinausragen.

3. Motor nach einem der vorhergehenden Ansprüche, wobei in jedes Statormodul (MS) mehrere Wicklungen (B) integriert sind, wobei jedes solche Modul aufweist:
- eine einzige elektronische Managementeinheit (3), die in der Lage ist, alle Wicklungen (B) des Moduls mit Strom zu versorgen,
- oder mehrere elektronische Management-Untereinheiten, wobei jede Untereinheit einer solchen Wicklung zugeordnet ist.

4. Motor nach einem der vorhergehenden Ansprüche, wobei die elektronischen Managementeinheiten (3) der Statormodule (MS) mit ihrer eigenen Stromversorgungsvorrichtung (30) verbunden sind.

5. Motor nach Anspruch 4, wobei jede Stromversorgungsvorrichtung (30) direkt auf der Leiterplatte (Cp) befestigt ist, welche die elektronische Managementeinheit (3) trägt, welcher die Vorrichtung zugeordnet ist.

6. Motor nach Anspruch 5, wobei jedes Statormodul (MS) eine einzige Stromversorgungsvorrichtung (30) aufweist, die in der Lage ist, alle Wicklungen (B) des Moduls mit Strom zu versorgen.

7. Motor nach Anspruch 5, wobei jedes Statormodul (MS) mehrere Stromversorgungsvorrichtungen (30) aufweist, welche jeweils einer der Wicklungen (B) des Moduls zugeordnet sind.

8. Motor nach einem der Ansprüche 1 bis 3, wobei die elektronischen Managementeinheiten (3) der Statormodule (MS) mit einer gemeinsamen Stromversorgungsvorrichtung verbunden sind.

9. Motor nach einem der vorhergehenden Ansprüche, wobei ein Fluss- und/oder Temperatursensor auf der Leiterplatte jedes Statormoduls (MS) befestigt ist, um die Funktionsweise jeder Statorwicklung (B) überwachen zu können.

10. Motor nach einem der vorhergehenden Ansprüche, wobei jede elektronische Managementeinheit (3) mit einer gemeinsamen Steuer- oder Überwachungseinheit verbunden ist, deren Aufgabe es ist, Anweisungen für jede der Managementeinheiten zu erzeugen, wobei in die gemeinsame Steuer- oder Überwachungseinheit eine Computeranwendung integriert ist, die Anweisungen zur Steuerung jeder besagten Einheit in drei Betriebsarten aufweist:
- einer Motorbetriebsart, in der die Wicklungen (B) durch wenigstens eine Stromversorgungsvorrichtung erregt werden, um ein Antriebsdrehmoment am Rotor (R) zu erzeugen,
- einer Generatorbetriebsart, in der die Wicklungen (B) nicht erregt werden, wobei die Vorbeibewegung der magnetisierten Pole (P) vor den Wicklungen einen Strom in diesen Letzteren erzeugt, wobei der Strom verwendet wird, um eine oder mehrere Batterien wiederaufzuladen,
- einer inaktiven Betriebsart, in der die Wicklungen (B) nicht erregt werden und von jeder Stromversorgungsquelle getrennt sind.

11. Motor nach einem der vorhergehenden Ansprüche, wobei in die Rotorpole (P) jeweils ein Paar von Magneten (An, As) integriert ist, die dafür ausgelegt sind, sich beiderseits der Enden (Bn, Bs) der Statorwicklungen (B) zu positionieren, wobei die Erregung der Wicklungen zur Erzeugung eines Magnetfeldes an jedem ihrer Enden führt, wobei das Feld eine tangentiale Anziehungskraft, die in der Lage ist, die Paare von Magneten zu den Enden hin anzuziehen, und/oder eine tangentiale Abstoßkraft, die in der Lage ist, die Paare von Magneten von den Enden abzustoßen, ausübt.

12. Motor nach Anspruch 11, wobei das Paar von Magneten (An, As) jedes Rotorpols (P) an den Schenkeln (40) einer U-förmigen Struktur (4) angeordnet ist, wobei die Schenkel beiderseits der Wicklungen (B) des Stators (S) positionierbar sind, wenn der Rotor (R) in Rotation versetzt wird.

13. Motor nach Anspruch 12, wobei die Magnete (An, As) symmetrisch an den Schenkeln (40) im Inneren der U-förmigen Struktur (4) befestigt sind, wobei diese Letztere ihrerseits an der Struktur des Rotors (R) befestigt ist.

14. Motor nach einem der vorhergehenden Ansprüche, wobei die Wicklungen (B) des Stators nicht identisch sind, wobei die Wicklungen Drähte mit unterschiedlichen Durchmessern und/oder unterschiedlichen Anzahlen von Windungen aufweisen.

15. Land-, See- oder Luftfahrzeug, **dadurch gekennzeichnet, dass** der Motor nach einem der Ansprüche 1 bis 14 in das Fahrzeug integriert ist.

## Claims

1. Brushless electromagnetic motor comprising a stator (S) and a rotor (R) able to move in rotation with respect to said stator, and wherein:
- the rotor (R) comprises magnetized poles (P) distributed radially about the axis of rotation (A) of said rotor,
- the stator (S) comprises windings (B) having two ends (Bn, Bs), said ends having reversed polarities when said windings are excited, said windings being distributed about the axis of rotation (A), facing the poles (P) of the rotor (R), said windings being excited in sequence so as to create a rotating magnetic field that drives said rotor in rotation,
- the stator (S) is formed of a plurality of stator modules (MS), each said stator module being associated with at least one winding (B) able to create a magnetic field when a current flows through it,
- each stator module (MS) incorporates its own electronic management unit (3), said management unit managing only the electric power supply for said winding (B) with which said module is associated,
- each stator module (MS) comprises a printed circuit board (Cp) to which the electronic management unit (3) is directly attached, **characterized in that** said at least one winding (B) is also attached directly to said printed circuit board.

2. Motor according to Claim 1, wherein the windings (B) project beyond the plane of the printed circuit boards (Cp) to which they are attached.

3. Motor according to either of the preceding claims, wherein each stator module (MS) incorporates a plurality of windings (B), each said module including:
- a single electronic management unit (3) able to supply electric power to all of the windings (B) of said module,
- or a plurality of electronic management subunits, each subunit being associated with one said winding.

4. Motor according to one of the preceding claims, wherein the electronic management units (3) of the stator modules (MS) are connected to their own electric power supply device (30).

5. Motor according to Claim 4, wherein each electric power supply device (30) is attached directly to the printed circuit board (Cp) bearing the electronic management unit (3) with which said device is associated.

6. Motor according to Claim 5, wherein each stator module (MS) includes a single electric power supply device (30) that is able to supply electric power to all of the windings (B) of said module.

7. Motor according to Claim 5, wherein each stator module (MS) includes a plurality of electric power supply devices (30) that are each associated with one of the windings (B) of said module.

8. Motor according to one of Claims 1 to 3, wherein the electronic management units (3) of the stator modules (MS) are connected to a common electric power supply device.

9. Motor according to one of the preceding claims, wherein a flux and/or temperature sensor is attached to the printed circuit board of each stator module (MS) so as to be able to supervise the operation of each stator winding (B).

10. Motor according to one of the preceding claims, wherein each electronic management unit (3) is connected to a common controller or supervisor whose role is to generate instructions for each of said units, said common controller or supervisor incorporating a computer application including instructions for driving each said unit in accordance with three modes of operation:
- a motor mode in which the windings (B) are excited by at least one electric power supply device so as to generate a motor torque on the rotor (R),
- a generator mode in which the windings (B) are not excited, the passage of the magnetized poles (P) in front of said windings generating a current in said windings, said current being used to recharge one or more batteries,
- an inactive mode in which the windings (B) are not excited and are isolated from any power source.

11. Motor according to one of the preceding claims, wherein the rotor poles (P) each incorporate a pair of magnets (An, As) that are configured to be positioned on either side of the ends (Bn, Bs) of the stator windings (B), the excitation of said windings leading to the generation of a magnetic field at each of their said ends, said field exerting an attractive tangential force able to attract said pairs of magnets towards said ends, and/or a repulsive tangential force able to repulse said pairs of magnets from said ends.

12. Motor according to Claim 11, wherein the pair of magnets (An, As) of each rotor pole (P) is arranged on the branches (40) of a U-shaped structure (4), said branches being able to be positioned on either side of the windings (B) of the stator (S) when the rotor (R) is set in rotation.

13. Motor according to Claim 12, wherein the magnets (An, As) are attached symmetrically to the branches (40), inside the U-shaped structure (4), said U-shaped structure itself being attached to the structure of the rotor (R).

14. Motor according to one of the preceding claims, wherein the windings (B) of the stator are not identical, said windings having wires with different diameters and/or a different number of turns.

15. Land, marine or air vehicle, **characterized in that** it incorporates the motor according to one of Claims 1 to 14.
